# EUROPEAN PATENT SPECIFICATION

(11) **EP 0 566 352 B1**
(45) Date of publication and mention of the grant of the patent: **17.09.1997**
(21) Application number: 93302840.9
(22) Date of filing: 13.04.1993
(51) Int. Cl.: H04B 10/10, H02K 41/02

(54) **Optical atmospheric link system**
Optische atmosphärische Strecke
Liaison optique atmosphérique

(30) Priority: 11.04.1992 JP 117945/92
(43) Date of publication of application: 20.10.1993
(73) Proprietor: SONY CORPORATION, Tokyo 141 (JP)
(72) Inventor: Ito, Yujiro, c/o Patents Division, Sony Corp., Tokyo 141 (JP); Suzuki, Kohji, c/o Patents Division, Sony Corp., Tokyo 141 (JP); Otobe, Takashi, c/o Patents Division, Sony Corp., Tokyo 141 (JP)
(74) Representative: Williams, Janice

(56) References cited:
- EP-A- 0 206 668
- GB-A- 2 218 874

## Description

This invention relates to an optical atmospheric link system, and is particularly suitable for an optical atmospheric link system for transmitting desired data by a light beam transmitting through space.

Heretofore, regarding this type of optical atmospheric link system, a system which can transmit and receive desired data between the point of transmission by a light beam transmitting through space has been proposed (cf. Japanese Patent Application laid Open No. 305734/1989 and GB-A-2 218 874)

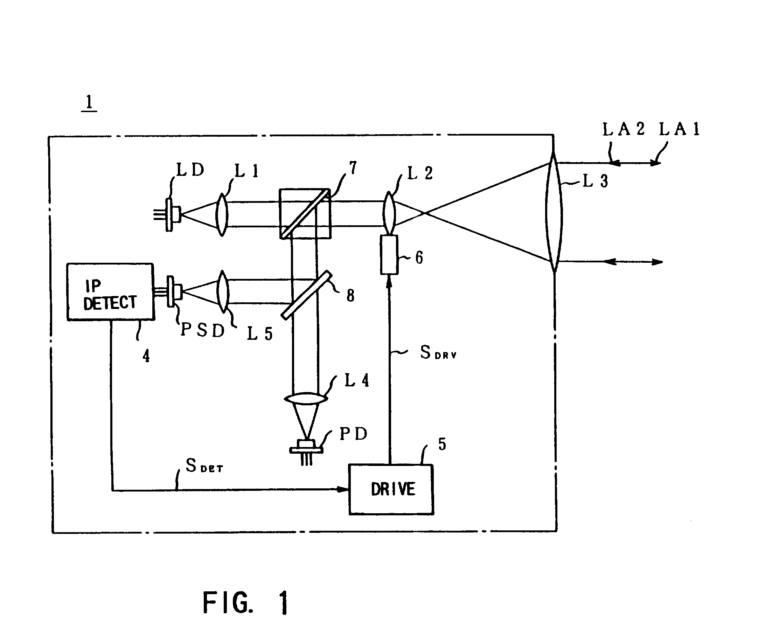

As shown in Fig. 1, in the optical atmospheric link system, a laser diode LD is driven by a predetermined data signal and a light beam LA1 of a predetermined polarization plane is emitted from the laser diode LD.

A lens L1 transforms the light beam LA1 to a parallel luminous ray. The light beam LA1 passes through a lens L1 and polarization beam splitter 7, and via lenses L2 and L3 so as to be sent to the destination point.

In this way, the optical atmospheric link system 1 delivers the light beam LA1 of a predetermined polarization plane to the destination point.

The lens L3 receives the light beam arriving from the remote point of transmission and then leads it to the polarization beam splitter 7 via the lens L2.

At the remote point of transmission, a light beam LA2 which is orthogonal in the polarization plane to the light beam LA1, is radiated.

Hence, in the optical atmospheric link system 1, the light beam LA2 is reflected with the polarization splitter 7, and then condensed through a half mirror 8 and a lens L4 to a light receiving element PD .

In this way, in the optical atmospheric link system 1, the light beam LA2 arriving from the remote point of transmission is received so that the data can be received.

The light beam LA2 which arrives at the half mirror 8 is radiated through a lens L5 to an incident position detecting element PSD, and the incident position at the incident position detecting element PSD is detected in a incident position detecting circuit 4. The incident position detecting circuit 4 detects the incident position of the light beam LA2 by the incident position detecting element PSD, and then the difference from the target incident position is sent to a drive circuit 5 as a deviation-voltage signal S_{DET}.

The drive circuit 5 delivers a drive signal S_{DRV} to an actuator 6 based on the deviation-voltage signal S_{DET} so that the actuator 6 is driven, thus the lens L2 is driven and the incident position of the light beam LA2 is servo-controlled.

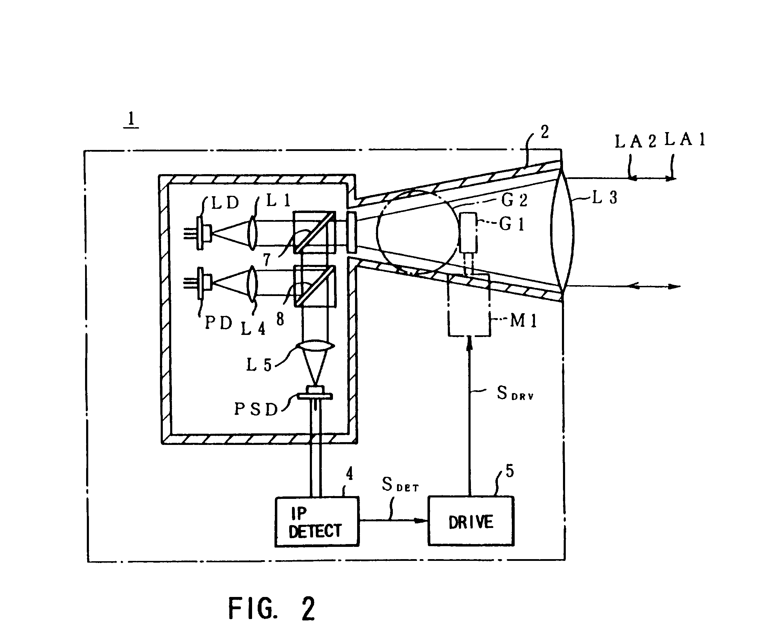

Besides, as shown in Fig. 2, the drive signal S_{DRV} outputted from the drive circuit 5 is supplied to a motor M1 to turn a mirror barrel 2 up and down or right and left. Thus, the mirror barrel 2 is acted upon through a worm gear G1 fixed to the output axis of the motor M1 and a gear G2 set up on the mirror barrel 2.
Therefore, the mirror barrel 2 is servo-controlled to turn up and down or right and left so that the incident position of the light beam LA2 can be control-led.

In the method of Fig. 1, the light axis of the internal optical system is automatically shifted relative to the large-aperture lens L3 so as to match the angle of light beam LA1 with the angle of light beam LA2 into alignment to form an atmospheric linking line. In this method, because a small lens in the optical system is moved, the alignment maintaining performance is comparatively high. However, the requirement (an aberration amount) for the angle of field of the optical system (the large-aperture lens L3) is great, and there are problems with the complication of the construction, e.g. the number of lenses required.

Moreover, because the turning power of the motor M1 is transmitted to the mirror barrel 2 by a worm gear G1 and a gear G2, when the light axis of the optical atmospheric link system 1 is changed by disturbance, the changed amount must be corrected and servo-control in a short time is difficult.

European Published Patent Application EP-A-0206668 discloses a video camera system in which a gimbal mechanism driven by linear motors is used to steady the camera against unwanted movement.
According to the invention there is provided a light beam transmitting apparatus for an optical atmospheric link system for transmitting and receiving light beams carrying information signals between said light beam transmitting apparatus and receiver means which is located apart from said light beam transmitting apparatus, said light beam transmitting apparatus comprising:
light source means for generating a light beam modulated by an information signal;
optical system means for transmitting said light beam along a light path from said light source means towards said receiver means;
rigid housing means for installing at least said light source means and said optical system means;
a base member for supporting said rigid housing means; and
rotating means attached to said base member and for rotating said housing means in two directions in a surface perpendicular to said light path; characterised by
said rotating means including linear motor means said comprised of first and second motor means, said first motor means having first rotor means and having first stator means for magnetically driving said first rotor means, at least one of said first rotor and stator means being coupled to said housing means and the other of said first rotor and stator means being coupled to said base member, said second motor means having second rotor means and having second stator means for magnetically driving said second rotor means, at least one of said second rotor and stator means being directly coupled to said housing means and the other of said second rotor and stator means being coupled to said base member,
wherein said linear motor means further includes sensing means for sensing relative velocity between said first stator means and said first rotor means, and between said second stator means and said second rotor means, said sensing means for sensing relative velocity serving to control driving of said linear motor means with a signal including a component proportional to sensed relative velocity and scaled to cancel induced electromotive voltages in said linear motor means.

Embodiments of the invention provide an optical atmospheric link system, which enables servo-controlling of the light axis with increasingly simple construction, in a short time, and moreover, with smaller driving power.

This can be achieved by the provision of an optical atmospheric link system 30, according to an aspect of this invention, which controls the angle of the light beam LA1 to be radiated to a predetermined direction comprising: a rigid body 2 for storing at least, the light source and the optical system for emitting the light beam LA1 emitted from the light source to an atmospheric linking line, and a rotating means 32 and 35 for the housing 31 for supporting and freely rotating the rigid body 2 with two independent axes in the perpendicular plane to the light beam LA1, so that the turning force to rotate the rigid body 2 is applied to the rigid body 2 with no contact. The rotating means 32 and 35 is composed of a linear motor.

By transmitting the turning force with no contact, when the rigid body 2 storing the optical system is rotated, the change of the light axis of the rigid body 2 due to disturbances can be compressed. Therefore, the adjustment of the light axis can be servo-controlled with high-speed, and at the same time, the light axis can be adjusted with smaller driving force.

In the embodiments of this invention, the angle of field of optical system (i.e. of lens) does not restrict the correction range of the light beam angle deviation, which is therefore enlarged larger than ±1 [°]. As a result, the restriction of the operating environment of the optical atmospheric link system (the quality sway angle) can be reduced.

Further, the requirement for the angle of field can be lowered to enable the simplification of constitution of the optical system.

Furthermore, because of the existence of the compression effect of the sway angle obtained by a slipping, the control amount may be smaller than in a case of comparison with the constitution using a geared motor or other not having a slipping mechanism. As a result, the power consumption can be reduced.

Furthermore, the number of parts composing the optical system can be minimized to the number needed for emitting and receiving the light beam. And loss due to the internal optical system is reduced improving the system power margin.

Embodiments of the invention will now be described, by way of example, with reference to the accompanying drawings in which:
Fig. 1 is a schematic view showing a previously proposed optical atmospheric link system;
Fig. 2 is a schematic view showing a previously proposed optical atmospheric link system;
Fig. 3 is a perspective view illustrating one embodiment of the optical atmospheric link system according to the present invention;
Fig. 4 is a schematic perspective view illustrating a construction of a linear motor for driving a mirror barrel;
Fig. 5 is a sectional view for explanation of a driving principle of the linear motor;
Fig. 6 is a schematic view showing the connection between the linear motor and the mirror barrel; and
Fig. 7 is a connection diagram showing the equivalent circuit for driving a linear motor.

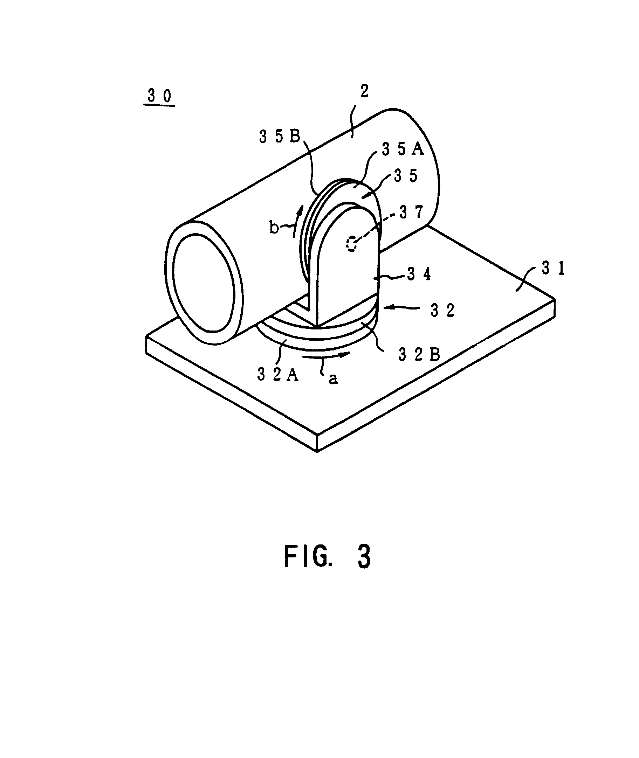

Referring to Fig. 3 wherein the portions corresponding to those in Fig. 2 are marked with the same numerals and characters, in the optical atmospheric link system 30, the mirror barrel 2 has inner drive circuit 5 outputting the drive signal S_{DRV} to drive the linear motor 32 and 35, based on the detected result of the optical system and the incident position detecting means PSD and 4 as same as the construction described above in Fig. 2, and is supported on the supporting table 31.

That is, a stator part 32A is fixed on the supporting table 31, and moreover a supporting part 34 is fixed at a rotor part 32B of the linear motor 32.

Hence, the linear motor 32 is driven to rotate the supporting part 34 to the direction of arrow "a" or to the opposite direction centering around a vertical axis.

Further, the stator part 35A of the linear motor 35 is fixed to the supporting part 34, and moreover, the mirror barrel 2 is fixed at the rotor part 35B of the linear motor 35.

Hence, the linear motor 35 is driven to turn the mirror barrel 2 to the direction shown with arrow "b" or to the opposite direction centering around a horizontal axis 37. This rotating axis is orthogonal to the optical system of the mirror barrel 2.

Thus, the optical system is constructed generally such as to obtain a gimbal movement against the supporting table 31.

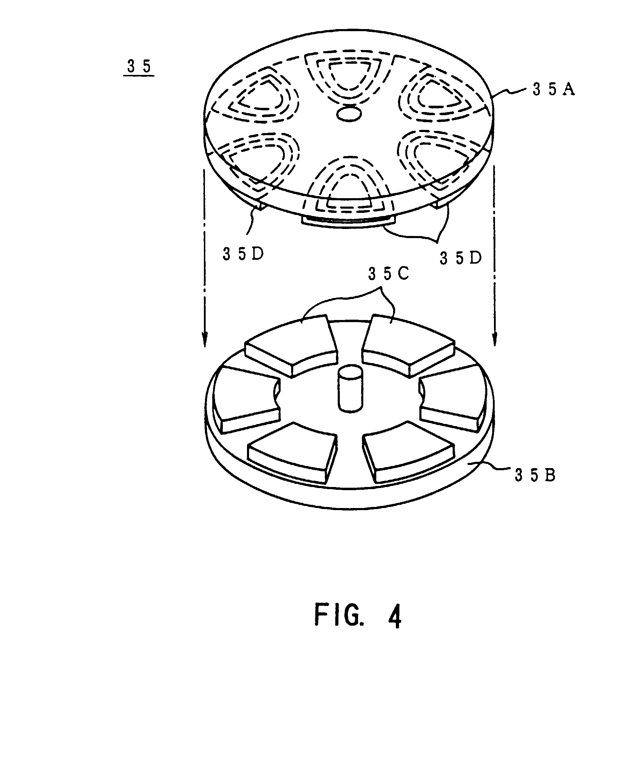

The construction of the linear motor 35 is shown in Fig. 4. That is, in Fig. 4, a plurality of magnets 35C are fixed at the rotor part 35B in a concentric circle in the linear motor 35, and the coils 35D of the stator part 35A are set in the position facing the magnets 35C.

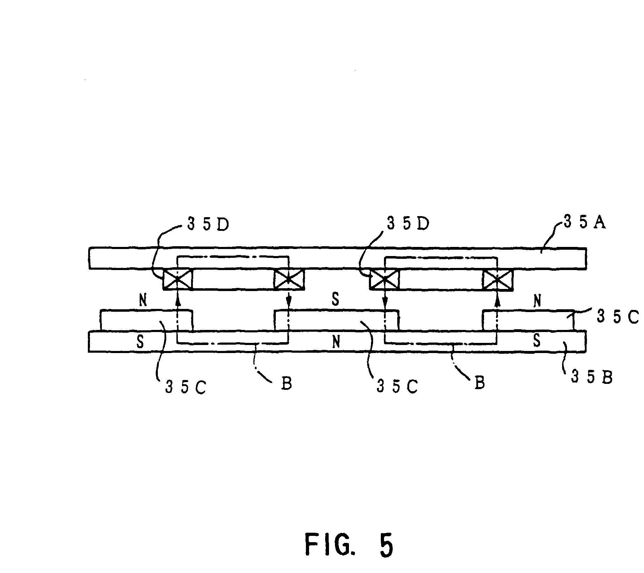

Accordingly, as shown in Fig. 5, by turning on the drive current to the coil 35D of the stator part 35A, a drive current flows to the direction crossing the magnetic field B so as to rotate the rotor part 35B.

The linear motor 32 comprises also the same construction. Thus, by driving the linear motors 32 and 35, the light axis of light beams LA1 and LA2 in the optical atmospheric link system 30 can be changed freely in three-dimensional space.

In this way, the mirror barrel 2 is driven based on the deviation voltage signal S_{DET} obtained in the incident position detecting element PSD (Figs. 1 and 2) of the optical atmospheric link system 30 so that the incident position of the light beam LA2 radiating to the incident position detecting element PSD is adjusted to the target position (that is, the position enabling the emission and reception the light beam to and from the object to be transmitted.

In this construction, the two rotating axes of the linear motor are aligned with the axes balancing with the optical system, which is the axes passing through the center of gravity of the optical system, in order that the parallel movement component of the disturbance is not transformed into the rotation component of the optical system.

In the case of optical atmospheric linking, the rotation component leads to the most of light beam deviation. Therefore, only the rotation component of disturbance, in which the axis aligning with the optical axis of the optical system among the three orthogonal axes of rotation is negligible) is compressed.

In the linear motors 32 and 35, the rotors 32B and 35B and the stator parts 32A and 35A are connected by a bearing 35E to slide very smoothly. When rotary angular acceleration is generated by disturbance on the supporting table, the linear motor slips if the value exceeds a threshold value. Then, the acceleration to the rotor side, which is the optical system side, is reduced extremely. Here, it can be considered that the stator side is fixed to the supporting table 31 together with the linear motors 32 and 35, and the rotor side is fixed to the optical system.

The direction to the light beam LA1 of the optical system to be radiated does not change even when rotary angular acceleration is applied to the apparatus housing being the supporting table 31, so that the optical system may stand still regarding the rotating direction. Therefore, when the angle is corrected by the electromagnetic force of the linear motors 32 and 35, the optical system is controlled to stand still.

If the linear motors 32 and 35 slip, because the optical system is controlled to stand still, the slip contributes to a portion of the angle correction control effect.

Actually, this contribution of the slip is large so that the electromagnetic force and follow-up performance to be required for the linear motor becomes substantially lower than the case when no slip is supposed, in the case which it is driven by gears, and thus a small linear motor being consumed power can be used.

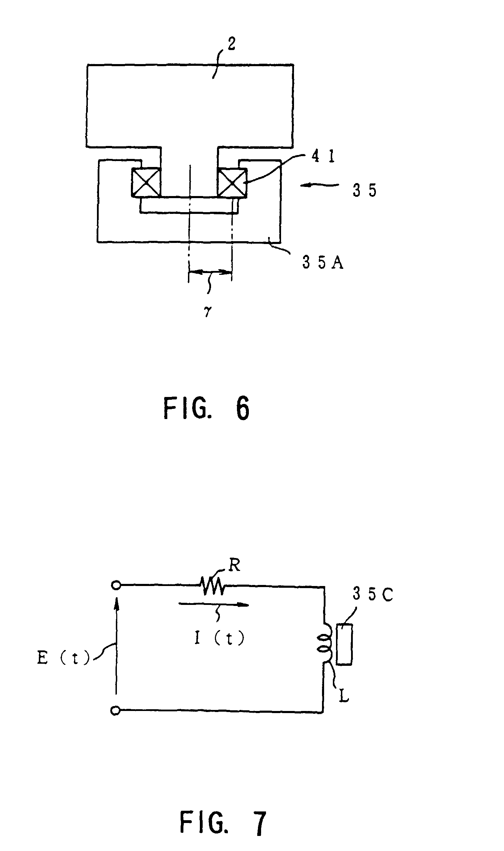

Fig. 6 is a model of the linear motor for the explanation of the disturbance compression ratio of the angle correction control effect due to said slip.

When the stator is rotated with an angular acceleration α_{w}, the torque T₁ generated on the rotor is represented by the following equation:${\text{T}}_{\text{1}} \text{= mgµr}$ In this equation, "m" represents the mass of the optical system fixed to the rotor, "g" represents the gravitational acceleration, "µ" represents the friction coefficient between the inner and outer of the bearing, and "r" represents the distance between the rotary center and the center of the bearing ball.

Further, the inertial force T₂ is represented by the following equation:${\text{T}}_{\text{2}} {\text{= Iα}}_{\text{w}}$ In this equation, "I" represents the inertial momentum of the optical system fixed to the rotor determined by the mass and shape thereof, and "α_{w}" represents the angular acceleration.

In the case when the angular acceleration becomes T₁ < T₂, the rotor moves together with the stator so as to move with an acceleration of α_{w} with out slip.

In the case of a disturbance having an angular acceleration of T₁ > T₂, the rotor slips to move with an acceleration of αᵣ represented by the following equation:${\text{α}}_{\text{r}} \text{=} \frac{{\text{T}}_{\text{1}}}{\text{I}}$ The disturbance compression ratio η in this case is represented by the following equation:$\text{η =} \frac{{\text{α}}_{\text{r}}}{{\text{α}}_{\text{w}}}$

Substituting concrete numbers, the value of compression ratio η will be obtained. That is, m = 1[kg], I = 0.005[kgm], g = 9.8[m/sec²], µ = 0.0013, r = 0.0125[m] result in the following:${\text{T}}_{\text{1}} \text{= mgµr = 0.00016}$ At this time, the acceleration αᵣ becomes as follows:${\text{α}}_{\text{r}} {\text{= 0.032 [m/sec}}^{\text{2}} \text{]}$

Further, when the disturbance has an angular amplitude of ±1[°] and is of a sine wave of 1[Hz] in frequency, the maximum angular acceleration α_{wmax} becomes the following:${\text{α}}_{\text{wmax}} {\text{= 0.689 [rad/sec}}^{\text{2}} \text{]}$ The inertial force T₂ in the rotor side becomes as shown in the following equation:${\text{T}}^{\text{2}} {\text{= Iα}}_{\text{w}} {\text{= 0.0034 [Kgm}}^{\text{2}} \text{/sec]}$

In this equation, the compression ratio η becomes as follows:$\text{η = 0.032/0.689 = 0.046 (26dB)}$ Therefore, an extremely high effect of compression is obtained.

When the diameter of the large aperture lens is 10 [cm] and the beam diameter at 1 [km] in distance is 40 [cm], the angle difference requirement of the optical system is within 0.01 [°]. Therefore, in the case of the disturbance of ±1[°] and 1 [Hz], the compression ratio required becomes 40 [dB]. The slip compresses it by 26 [dB] so that the compression ratio required to the control system is only 13 [dB], and the value is enough to be actualized in the optical system having the above inertia. The compression due to slip increases at 12 [dB/Oct] for the frequency of disturbance so that the frequency characteristic of compression required to the control system can be actualized.

The compression ratio is proportional to "r" and "µ", and is inversely proportional to the angular amplitude, the square of the frequency, and the inertia "I", within the range that slipping occurs. Therefore, it is favorable for compression ratio that "r" and "µ" are made as small as possible and "I" is made large. But if "I" is made large, more electromagnetic force is needed in controlling the linear motor. Moreover, without that the alignment maintaining performance worsens, designing keeping this influence in mind is needed.

Besides, when the frequency is 1 [Hz], the angular amplitude generating the slip is ±0.046 [°].

The disturbance compression effect due to slip has been described above, however, induced electromotive voltage is generated by the movement of the coil in the linear motors 32 and 35. And when a current caused by the induced electromotive voltage flows, the propulsive power F_{b} is generated between the rotor and stator. Thus, not only said torque T₁ generated in slipping but also the propulsive power is applied to the rotor, and as a result, the compression ratio worsens. In the case when the coil is opened, for instance, the current does not flow even when the induced electromotive voltage is generated, therefore no propulsive power caused by the induced electromotive voltage is generated.

Fig. 7 shows the equivalent circuit of a coil and the current to voltage equation of a coil is as follows:$\text{L} \frac{\text{dI(t)}}{\text{dt}} \text{= E(t)-nB1v(t)}$

In this equation, "L" represents the inductance of the coil, "I(t)" represents the current running through the coil, "E(t)" represents the input voltage of the coil, "n" represents the coil turn number, "B" represents the flux density, "1" represents the length of the coil in a magnetic field, and "v(t)" represents the speed between the rotor and the stator, whereby, the current running through the coil "I(t)" is determined by the equation (10), and the propulsive power F working to the coil, in accordance with Fleming's rule, is represented by the following equation:$\text{F = nB1I(t)}$

When controlling, if it is voltage driven, that is, a voltage proportional to the deviation is provided to the coil, the current being proportional to the control deviation and the current caused by the induced electromotive voltage flow, the voltage running to the coil, as shown in equation (10), worsens the control characteristic.

In the present method, a current drive circuit is prepared just before the coil, and by flowing through the coil a current proportional to the control deviation, the generation of current caused by the induced electromotive voltage is restrained, and the worsening of the control characteristic is prevented. In this case, even when induced electromotive voltage is generated, the current running through the coil does not change.

Further, the voltage applied to the coil is as shown in the following:$\text{E(t) = βx(t)+nB1v(t)}$

If this equation (12) is substituted to the equation (10), the effect due to the induced electromotive voltage from the current running through the coil is canceled.

"v(t)" must be known in order to generate the voltage as shown in the equation (12), however, a speed sensor for detecting the speed between the rotor and the stator may be set. Or, angular speed sensors may respectively be set to the rotor and stator, and the difference of the two angular velocity may be taken.

With the above constitution, in the optical atmospheric link system 30, as compared with the previously proposed method of driving by gears G1 and G2 (Fig. 7), the mirror barrel 2 is turned directly by the linear motors 32 and 35 so as to reduce the movement of the mirror barrel 2 when disturbance is applied.

Therefore, the servo-control against disturbances can be decreased, and this enables aligning of the optical axis of the optical atmospheric link system 30 to be increasingly easy.

Besides, note that the embodiment described above has dealt with the case where linear motors 32 and 35 are used as the rotating means for turning the mirror barrel 2. However, the present invention is not limited to this, but other motors having variable constitutions may be applied widely.

While preferred embodiments of the invention have been described, it will be appreciated to those skilled in the art that various changes and modifications may be made without departing from the scope of the invention.

## Claims

1. A light beam transmitting apparatus (30) for an optical atmospheric link system for transmitting and receiving light beams (LA1,LA2) carrying information signals between said light beam transmitting apparatus and receiver means which is located apart from said light beam transmitting apparatus, said light beam transmitting apparatus comprising:
light source means (LD) for generating a light beam modulated by an information signal;
optical system means (L1,L3) for transmitting said light beam along a light path from said light source means towards said receiver means;
rigid housing means (2) for installing at least said light source means and said optical system means;
a base member (31) for supporting said rigid housing means; and rotating means (32,35) attached to said base member and for rotating said housing means in two directions in a surface perpendicular to said light path; characterised by
said rotating means including linear motor means comprised of first and second motor means, said first motor means having first rotor means (35B) and having first stator means (35A) for magnetically driving said first rotor means, at least one of said first rotor and stator means being coupled to said housing means and the other of said first rotor and stator means being coupled to said base member, said second motor means having second rotor means (32B) and having second stator means (32A) for magnetically driving said second rotor means, at least one of said second rotor and stator means being directly coupled to said housing means and the other of said second rotor and stator means being coupled to said base member;
wherein said linear motor means further includes sensing means for sensing relative velocity between said first stator means and said first rotor means, and between said second stator means and said second rotor means, said sensing means for sensing relative velocity serving to control driving of said linear motor means with a signal including a component proportional to the sensed relative velocity and scaled to cancel induced electromotive voltages in said linear motor means.

2. A light beam transmitting apparatus as claimed in claim 1 comprising means for detecting an angle of the light beam transmitted from said optical system means, said means for detecting an angle serving to control driving of said linear motor means with a signal including a component proportional to detected angle; and
wherein said linear motor means slips when said motor means accelerates beyond a predetermined value, thereby restricting the acceleration of the rotation of said housing means.

3. A light beam transmitting apparatus as claimed in any one of claim 1 and 2 comprising:
a support member (34) for supporting said housing means, said base member supporting said support member;
wherein at least one of said first rotor and stator means is directly coupled to said housing means and the other of said first rotor and stator means is directly coupled to said support member, and at least one of said second rotor and stator means is directly coupled to said support means and the other of said second rotor and stator means is directly coupled to said base member.

## Patentansprüche

1. Lichtstrahl-Übertragungsvorrichtung (30) für ein optisches atmosphärisches Übertragungssystem zur Aussendung und zum Empfang von Lichtstrahlen (LA1, LA2), die Informationssignale zwischen der Lichtstrahl-Übertragungsvorrichtung und einem Empfänger übertragen, der sich entfernt von der Lichtstrahl-Übertragungsvorrichtung befindet, wobei die Lichtstrahl-Übertragungsvorrichtung aufweist:
eine Lichtquelle (LD) zur Erzeugung eines Lichtstrahls, der durch ein Informationssignal moduliert ist,
ein optisches System (L1, L3) zur Übertragung des Lichtstrahls längs eines Lichtweges von der Lichtquelle in Richtung des Empfängers,
ein steifes Gehäuse (2) zur Aufnahme wenigstens der Lichtquelle und des optischen Systems,
ein Grundelement (31) zum Tragen des steifen Gehäuses, und
eine Dreheinrichtung (32, 35), die an dem Grundelement angebracht ist, um das Gehäuse in zwei Richtungen in einer Ebene senkrecht zu dem Lichtpfad zu drehen,
**dadurch gekennzeichnet**, daß die Dreheinrichtung eine Linearmotor-Einrichtung bestehend aus einem ersten und einem zweiten Motor aufweist, wobei der erste Motor einen ersten Rotor (35B) und einen ersten Stator (35A) zur magnetischen Ansteuerung des ersten Rotors aufweist, wenigstens einer von erstem Rotor und Stator mit dem Gehäuse verbunden ist und der andere von erstem Rotor und Stator mit dem Grundelement verbunden ist, wobei der zweite Motor einen zweiten Rotor (32B) und einen zweiten Stator (32A) zur magnetischen Ansteuerung des zweiten Rotors aufweist, wenigstens einer von zweitem Rotor und Stator direkt mit dem Gehäuse verbunden ist und der andere von zweitem Rotor und Stator mit dem Grundelement verbunden ist,
wobei die Linearmotor-Einrichtung weiterhin eine Erfassungseinrichtung zur Erfassung der Relativgeschwindigkeit zwischen dem ersten Stator und dem ersten Rotor sowie dem zweiten Stator und dem zweiten Rotor aufweist, wobei die Erfassungseinrichtung die Relativgeschwindigkeit zur Steuerung der Ansteuerung der Linearmotor-Einrichtung mit einem Signal erfaßt, das eine Komponente proportional zu der erfaßten Relativgeschwindigkeit aufweist, die so bemessen ist, daß die induzierten elektromotorischen Spannungen in der Linearmotor-Einrichtung aufgehoben werden.

2. Lichtstrahl-Übertragungsvorrichtung nach Anspruch 1,
weiterhin aufweisend eine Einrichtung zur Erfassung eines Winkels des Lichtstrahls, der von dem optischen System ausgesendet wird, wobei die Einrichtung zur Erfassung eines Winkels zur Regelung der Ansteuerung der Linearmotor-Einrichtung mit einem Signal dient, das eine Komponente proportional zu dem erfaßten Winkel aufweist, und wobei die Linearmotor-Einrichtung schlupft, wenn die Motoreinrichtung über einen vorbestimmten Wert hinaus beschleunigt wird, wodurch die Beschleunigung der Drehung des Gehäuses beschränkt wird.

3. Lichtstrahl-Übertragungsvorrichtung nach einem der Ansprüche 1 und 2, weiterhin aufweisend ein Tragelement (34) zum Tragen des Gehäuses, wobei das Grundelement das Tragelement trägt,
wobei wenigstens einer von erstem Rotor und Stator direkt mit dem Gehäuse verbunden ist, der andere von erstem Rotor und Stator direkt mit dem Tragelement verbunden ist und wenigstens einer von zweitem Rotor und Stator direkt mit der Trageelement verbunden ist und der andere von zweitem Rotor und Stator direkt mit dem Grundelement verbunden ist.

## Revendications

1. Dispositif (30) d'émission de faisceaux de lumière pour un système de liaison optique atmosphérique pour émettre et recevoir des faisceaux de lumière (LA1, LA2) transportant des signaux d'information entre ledit dispositif d'émission de faisceaux de lumière et un moyen récepteur qui est situé à distance dudit dispositif d'émission de faisceaux de lumière, ledit dispositif d'émission de faisceaux de lumière comprenant :
un moyen (LD) formant source de lumière pour produire un faisceau de lumière modulé par un signal d'information ;
un moyen (L1, L3) formant système optique pour émettre ledit faisceau de lumière le long d'un trajet de lumière partant dudit moyen formant source de lumière en direction dudit moyen récepteur ;
un moyen (2) formant boîtier rigide pour installer au moins ledit moyen formant source de lumière et ledit moyen formant système optique ;
un élément base (31) pour supporter ledit moyen formant boîtier rigide ; et
un moyen (32, 35) d'entraînement en rotation fixé audit élément base et destiné à faire tourner ledit moyen formant boîtier dans deux directions dans une surface perpendiculaire audit trajet de lumière ;
caractérisé :
en ce que ledit moyen d'entraînement en rotation comprend un moyen formant moteur linéaire constitué de premier et second moyens formant moteur, ledit premier moyen formant moteur ayant un premier moyen formant rotor (35B) et ayant un premier moyen formant stator (35A) pour entraîner de façon magnétique ledit premier moyen formant rotor, au moins l'un desdits premiers moyens formant rotor et stator étant accouplé audit moyen formant boîtier, et l'autre desdits premiers moyens formant rotor et stator étant accouplé audit élément base, ledit second moyen formant moteur ayant un second moyen formant rotor (32B) et ayant un second moyen formant stator (32A) pour entraîner de façon magnétique ledit second moyen formant rotor, au moins l'un desdits seconds moyens formant rotor et stator étant accouplé directement audit moyen formant boîtier, et l'autre desdits seconds moyens formant rotor et stator étant accouplé audit élément base ; et
en ce que ledit moyen formant moteur linéaire comprend en outre un moyen de détection pour détecter la vitesse relative entre ledit premier moyen formant stator et ledit premier moyen formant rotor, et entre ledit second moyen formant stator et ledit second moyen formant rotor, ledit moyen de détection destiné à détecter la vitesse relative servant à commander l'attaque dudit moyen formant moteur linéaire à l'aide d'un signal incluant une composante proportionnelle à la vitesse relative détectée, et mise à l'échelle, pour annuler des tensions électromotrices induites dans ledit moyen formant moteur linéaire.

2. Dispositif d'émission de faisceaux de lumière selon la revendication 1, comprenant un moyen destiné à détecter un angle du faisceau de lumière émis par ledit moyen formant système optique, ledit moyen destiné à détecter un angle servant à commander l'attaque dudit moyen formant moteur linéaire à l'aide d'un signal incluant une composante proportionnelle à l'angle détecté ; et
dans lequel ledit moyen formant moteur linéaire glisse lorsque ledit moyen formant moteur accélère au-delà d'une valeur prédéterminée, en réduisant ainsi l'accélération de la rotation dudit moyen formant boîtier.

3. Dispositif d'émission de faisceaux de lumière selon l'une quelconque des revendications 1 et 2, comprenant :
un élément support (34) pour supporter ledit moyen formant boîtier, ledit élément base supportant ledit élément support ;
dans lequel au moins l'un desdits premiers moyens formant rotor et stator est accouplé directement audit moyen formant boîtier et l'autre desdits premiers moyens formant rotor et stator est accouplé directement audit élément support ; et
dans lequel au moins l'un desdits seconds moyens formant rotor et stator est accouplé directement audit élément support et l'autre desdits seconds moyens formant rotor et stator est accouplé directement audit élément base.
